# EUROPEAN PATENT APPLICATION

(11) **EP 4 303 072 A1**
(43) Date of publication of application: **10.01.2024**
(21) Application number: 23180018.6
(22) Date of filing: 19.06.2023
(51) Int. Cl.: B60N 3/00

(54) **SUPPORT SURFACE SYSTEM**

(30) Priority: 28.06.2022 US 202263356289 P
(71) Applicant: Apple Inc., Cupertino, CA 95014 (US)
(72) Inventor: STORM, Trent, Cupertino, 95014 (US)
(74) Representative: COPA Copenhagen Patents

(57) **Abstract**

A support surface system includes a support surface portion that defines mounting locations spaced from one another and a fixture configured to secure an object. The support surface system also includes a retention portion having a first portion defined by the support surface portion at each of the mounting locations and a second portion defined by the fixture, with the second portion arranged to couple with the first portion at any of the mounting locations. The retention portion alternates between a retained state, in which the first portion and the second portion are coupled and motion of the fixture is restrained, and an unretained state, in which the first portion and the second portion are decoupled and the fixture is movable with respect to the support surface portion.

## Description

### CROSS-REFERENCE TO RELATED APPLICATION(S)

This application claims priority to and the benefit of U.S. Provisional Patent Application No. 63/356,289, filed June 28, 2022, the entire disclosures of which are incorporated by reference herein.

### TECHNICAL FIELD

This disclosure relates generally to the field of support surface systems.

### BACKGROUND

Some systems provide support surfaces within an interior of a compartment. Support surfaces allow individuals disposed within the compartment to place objects thereon. In one example, the compartment includes a support surface disposed proximate to a seat that supports the individual.

### SUMMARY

One aspect of the disclosure is a table system for a vehicle that includes a tabletop that defines mounting locations spaced from one another and a fixture configured to secure an object. The table system also includes a retention portion having a first portion defined by the tabletop at each of the mounting locations and a second portion defined by the fixture, with the second portion arranged to couple with the first portion at any of the mounting locations. The retention portion alternates between a retained state, in which the first portion and the second portion are coupled and motion of the fixture is restrained, and an unretained state, in which the first portion and the second portion are decoupled and the fixture is movable with respect to the tabletop.

In some implementations of the table system, at least one of the first portions includes one of a magnet and a plate and the second portion includes the other one of the magnet and the plate, wherein the plate comprises a ferrous material that is magnetically attracted toward the magnet.

In some implementations of the table system, at least one of the first portions of the retention portion includes a first magnet having a first polarity and the second portion includes a second magnet having a second polarity that is opposite the first polarity such that the first magnet and the second magnet are magnetically attracted toward one another.

In some implementations of the table system, at least one of the first portions includes one of a post and a cavity and the second portion includes the other one of the post and the cavity, with the cavity configured to receive the post in the retained state to restrain the fixture.

In some implementations of the table system, the retention portion further includes an actuator coupled to the post and arranged to move the post along an axis between a first position and a second position, with the post disposed within the cavity in the first position in the retained state and with the post withdrawn from the cavity in the second position in the unretained state.

In some implementations of the table system, the first portion of the retention portion includes the post, with the post configured to protrude above the tabletop in the first position to engage the cavity of the fixture, and with the post disposed within the tabletop in the second position.

In some implementations of the table system, the at least one of the first portions includes one of a magnet and a plate and the second portion includes the other one of the magnet and the plate, with the plate comprising a ferrous material that is magnetically attracted toward the magnet. The post and the cavity restrain horizontal movement of the fixture relative to the tabletop. The magnet and the plate restrain vertical movement of the fixture relative to the tabletop.

In some implementations of the table system, the table system further comprises a release portion coupled to the retention portion and arranged to alter the retention portion between the retained state and the unretained state.

In some implementations of the table system, the fixture includes an exterior surface and the release portion includes a contact patch along the exterior surface configured to be engaged by a passenger to alter the retention portion between the retained state and the unretained state.

In some implementations of the table system, the release portion moves the second portion of the retention portion from the retained state to the unretained state.

In some implementations of the table system, the fixture extends along a fixture axis orthogonal to the tabletop and includes an engagement surface having a wedge section disposed at an angle transverse to the fixture axis and an abutment section, adjacent the wedge section, and configured to extend parallel to the fixture axis, with the abutment section and the wedge section arranged to contact and secure the object.

In some implementations of the table system, the fixture includes a body that extends along a fixture axis orthogonal to the tabletop and a tray that extends laterally from the body along the tabletop, wherein the tray defines a recess configured to dispose and support the object therein.

Another aspect of the disclosure is a table system for a vehicle that includes a tabletop and a fixture having an engagement surface that extends from a proximal end, adjacent the tabletop, to a distal end. The engagement surface is configured to abut and secure an object. The table system also includes a retention portion having a first portion defined by the tabletop and a second portion defined by the fixture and arranged to couple with the first portion such that motion of the fixture is restrained.

In some implementations of the table system, the engagement surface has an abutment section that extends orthogonal to the tabletop and a wedge section adjacent the abutment section and disposed at an angle transverse to the abutment section, with the abutment section and the wedge section arranged to contact and secure the object.

In some implementations of the table system, the fixture includes a body that extends along a fixture axis orthogonal to an upper surface of the tabletop and a tray that extends laterally from the body along the upper surface of the tabletop, wherein the tray defines a recess configured to dispose and support the object therein.

In some implementations of the table system, the fixture comprises an elastomer that deforms around the object when the fixture contacts the object.

Another aspect of the disclosure is a table system for a vehicle that includes a tabletop that includes an upper surface, a fixture configured to secure an object, and a release portion operatively coupled to the fixture and including a contact patch configured to be engaged by a passenger. Engagement of the contact patch permits selective movement of the fixture along the upper surface.

In some implementations of the table system, the release portion is mounted to the fixture, with the fixture including an exterior surface and with the contact patch disposed along the exterior surface.

In some implementations of the table system, the release portion includes a button that extends from the exterior surface and includes the contact patch, with the button movable between a pressed position and a released position to permit selective movement of the fixture along the upper surface.

In some implementations of the table system, the table system further includes a retention portion having a first portion defined by the tabletop and a second portion defined by the fixture with the second portion arranged to couple with the first portion. The retention portion alternates between a retained state, in which the first portion and the second portion are coupled and motion of the fixture is restrained, and an unretained state, in which the first portion and the second portion are decoupled and the fixture is movable with respect to the tabletop.

Another aspect of the disclosure is a table system for a vehicle that includes a fixture configured to secure an object and a retention portion. The retention portion has a first portion configured to be defined by a tabletop at mounting locations spaced from one another and a second portion defined by the fixture, with the second portion arranged to coupled with the first portion at any of the mounting locations. The retention portion alternates between a retained state, in which the first portion and the second portion are coupled and motion of the fixture is restrained, and an unretained state, in which the first portion and the second portion are decoupled and the fixture is movable with respect to the tabletop.

### BRIEF DESCRIPTION OF THE DRAWINGS

FIG. 1 is a schematic side view illustration of a vehicle that includes a table system.
FIG. 2A and 2B are schematic top view illustrations of the table system that includes a fixture and a tabletop.
FIG. 3 is a side elevational view illustration of an example implementation of the fixture.
FIG. 4A is a side elevational illustration of an example implementation of the fixture.
FIG. 4B is a top plan view illustration of the example implementation of the fixture of FIG. 4A.
FIG. 5A is a side elevational illustration of an example implementation of the fixture.
FIG. 5B is a top plan view illustration of the example implementation of the fixture of FIG. 5A.
FIG. 6 is a side cross-sectional view illustration of an example implementation of the table system.
FIG. 7 is a schematic side view illustration of an example implementation of the table system.
FIG. 8 is a schematic side view illustration of an example implementation of the table system.
FIG. 9 is a cross-sectional side view illustration of an example implementation of the table system.
FIG. 10 is a cross-sectional side view illustration of an example implementation of the table system.
FIG. 11 is a cross-sectional side view illustration of an example implementation of the table system.

### DETAILED DESCRIPTION

This disclosure is directed to table systems for use in vehicle interiors that include a tabletop mounted to the vehicle within the vehicle interior and a fixture that may be positioned on the tabletop to secure an object to tabletop.

As an example, the table systems that are described herein may be of particular applicability to fully autonomous vehicles that do not require a human driver to be positioned near vehicle controls, thus facilitating various alternative passenger cabin configurations. For example, a passenger may be seated at a table during vehicle operation, rather than driving the vehicle. The passenger may utilize the tabletop to support objects, such as a phone or a laptop.

The table systems described herein retain objects to the tabletop during a vehicle event. As used herein, the term vehicle event refers to a collision, a crash, an evasive maneuver, or other circumstance that causes a sudden abnormal change in acceleration, speed, and/or direction of the vehicle. As used herein, detection of a vehicle event refers to detecting that a vehicle event has occurred or detecting that a vehicle event is predicted to occur (e.g., an imminent vehicle event). Retaining the objects to the tabletop prevents the objects from becoming dangerous projectiles within the vehicle during a vehicle event, which could collide with a passenger and result in bodily injury or death.

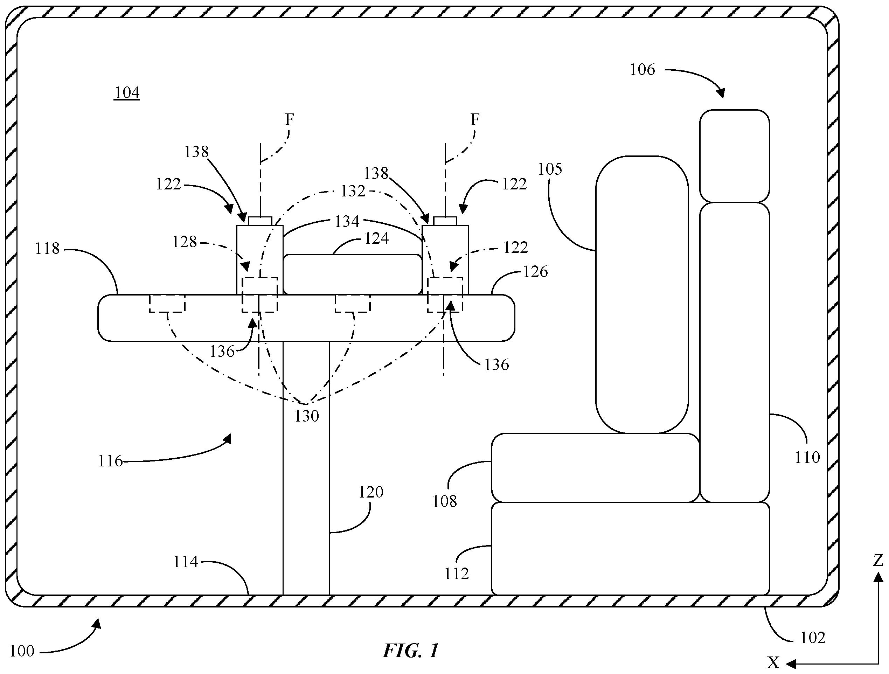

FIG. 1 is a schematic side view illustration of a vehicle 100. The vehicle 100 includes a body 102 defining a passenger cabin 104. The vehicle 100 will be described with reference to a longitudinal direction X (e.g., fore-aft), a lateral direction Y (e.g., side to side), and an elevational direction Z (e.g., up-down). The vehicle 100 may be a road-going vehicle that is supported by wheels and is able to travel freely upon roadways and other surfaces. One or more passenger 105 may travel in the vehicle 100 within the passenger cabin 104. The body 102 may be constructed of one or components, including (but not limited to) a frame, a subframe, a unibody, a monocoque, exterior body panels, interior body panels, and movable panels (e.g., doors, tailgate, hood, trunk lid, etc.).

The vehicle 100 may include a seat assembly 106 disposed within the passenger cabin 104. The seat assembly 106 may include a seat pan 108 and a seat back 110 for supporting the passenger 105 in a seated position. The seat assembly 106 may further include a seat support 112 that connects the seat pan 108 and the seat back 110 to a floor 114 of the body 102.

The vehicle 100 includes a table system 116 disposed within the passenger cabin 104. The table system 116 is positioned near the seat assembly 106. In the FIG. 1, the table system 116 is located directly ahead of the seat assembly 106 in the longitudinal direction X of the vehicle 100. This position of the table system 116 allows the table system 116 to be used by the passenger 105 while they are seated in the seat assembly 106. The table system 116 includes a tabletop 118 and a support assembly 120. In FIG. 1, the support assembly 120 is connected to the floor 114 of the body 102 and supports the tabletop 118 such that the tabletop 118 is located above the floor 114 and is accessible to the passenger 105 while seated in the seat assembly 106. However, the support assembly 120 may be connected to any suitable portion of the body 102. Moreover, the tabletop 118 may be connected to the seat assembly 106 such that the seat assembly 106 supports the tabletop 118.

The tabletop 118 defines mounting locations spaced from one another. The table system 116 further includes a fixture 122 configured to secure an object 124 to an upper surface 126 of the tabletop 118. As such, the table system 116 functions as a support surface system, with the tabletop 118 configured as a support surface portion that supports the object 124. The object 124 includes anything capable of being disposed on the tabletop 118 including (but not limited to): personal computing devices, notepads, stationeries, writing instruments, food, beverages, containers, and utensils. Furthermore, multiple objects 124 may be disposed on the tabletop 118. The table system 116 also includes a retention portion 128 having a first portion 130 defined by the tabletop 118 at each of the mounting locations and a second portion 132 defined by the fixture 122, with the second portion 132 arranged to couple with the first portion 130 at any of the mounting locations. The retention portion 128 alternates between a retained state, in which the first portion 130 and second portion 132 are coupled such that motion of the fixture 122 is restrained, and an unretained state, in which the first portion 130 and the second portion 132 are decoupled and the fixture 122 is movable with respect to the tabletop 118. More specifically, the passenger 105 may move the fixture 122 around the tabletop 118 and selectively couple the fixture 122 to the tabletop 118 at any of the multiple mounting locations. It is to be appreciated that fixture 122 may be disposed at any location on the tabletop 118, including locations that are not mounting locations. Said differently, the fixture 122 may sit on the tabletop 118 at locations that adjacent or spaced from mounting locations. The fixture 122 is not retained to the tabletop 118 at the non-mounting locations.

The fixture 122 has an engagement surface 134 that extends from a proximal end 136, adjacent the tabletop 118, to a distal end 138. The engagement surface 134 is configured to abut and secure the object 124. The coupling of the fixture 122 to the tabletop 118 defines a rigid structure that secures the object 124 during a vehicle event, thereby restraining motion of the object 124 with respect to the tabletop 118. The fixture 122 may serve as a wall or stop when disposed between the object 124 and the direction of travel of the vehicle 100 (more specifically, in the longitudinal direction X and/or the lateral direction Y), with the object 124 pressing into the engagement surface 134 during a vehicle event. The fixture 122 may also serve to squeeze an object 124 (such as papers) between the fixture 122 and the tabletop 118, securing the object 124 in the longitudinal direction X, the lateral direction Y, and the elevational direction Z. Furthermore, multiple fixtures 122 may be utilized on the tabletop 118, with the fixtures 122 spaced from one another and collectively abutting different portions of the object 124. The fixtures 122 may be spaced from the object 124, with the fixtures 122 serving as walls or stops when disposed between the object 124 and the direction of travel of the vehicle 100 (more specifically, in the longitudinal direction X and/or the lateral direction Y), with the object 124 pressing into the engagement surface 134 during a vehicle event. Alternatively, the fixtures 122 may contact the object 124 such that the fixtures 122 frictionally engage and secure the object 124 in the longitudinal direction X, the lateral direction Y, and the elevational direction Z. Furthermore, the fixture 122 may comprise an elastomer that deforms around the object 124 when the fixture 122 contacts the object 124. The deformation of the elastomer presents a larger surface area of the engagement surface 134 in contact with the object 124 to increase the friction therebetween. Although the fixture 122 and the object 124 are shown as separate components in FIG. 1, in other implementations the fixture 122 and the object 124 may be integrally formed as a single component, with the object 124 including the second portion 132 of the retention portion 128.

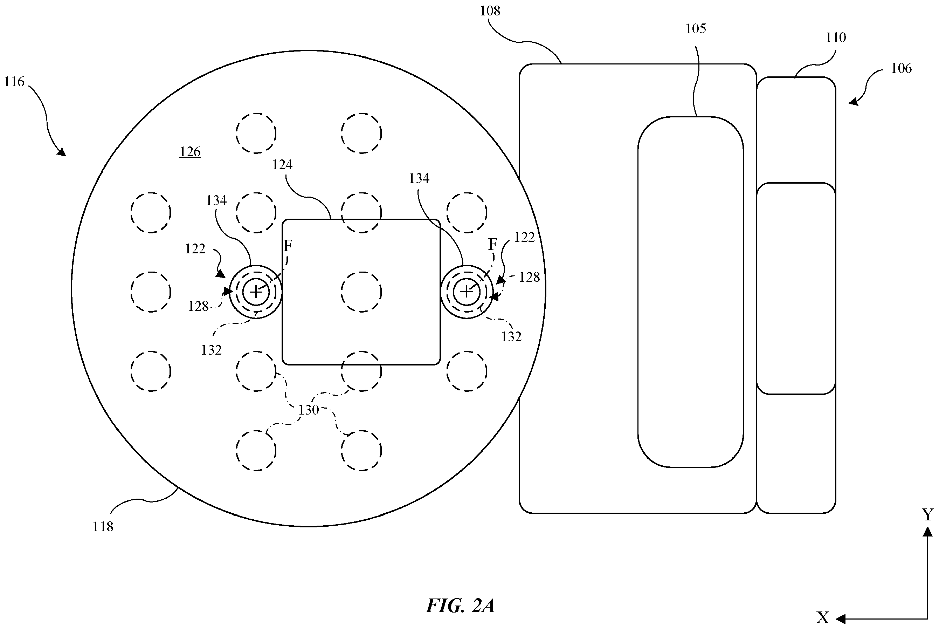

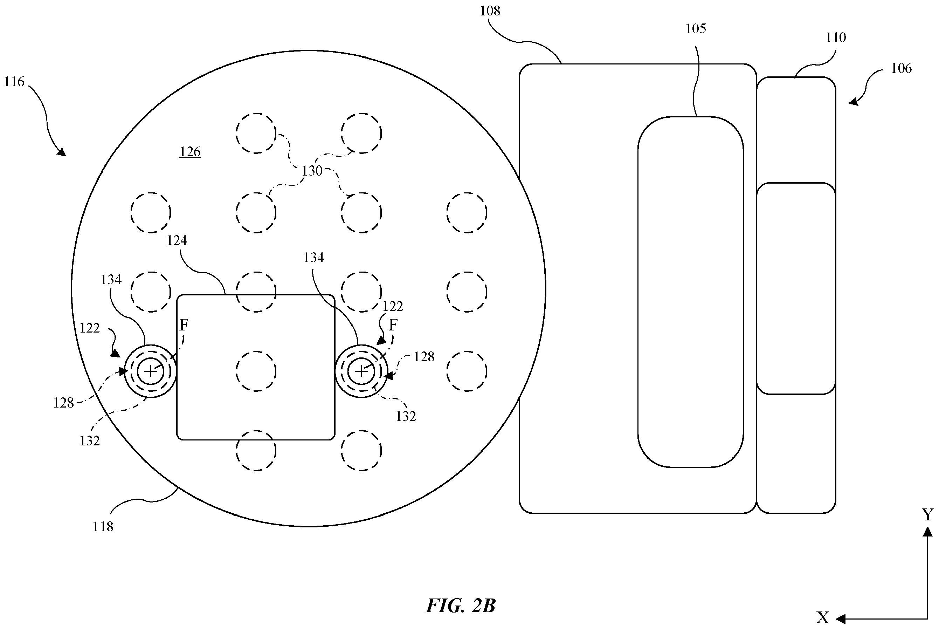

As shown in FIGS. 2A and 2B, the mounting locations are uniformly spaced from one another in a grid along the upper surface 126 of the tabletop 118. However, in other implementations the mounting locations may be disposed along a side surface and/or a bottom surface of the tabletop 118. Furthermore, the number of mounting locations, the disposition of the mounting locations, and the layout of the fixtures 122 at the mounting locations shown in FIGS. 2A and 2B are demonstrative. Any number of mounting locations as well as any suitable layout of the mounting locations may be utilized. For example, the mounting locations could be aligned in an annular configuration around a perimeter of the tabletop 118.

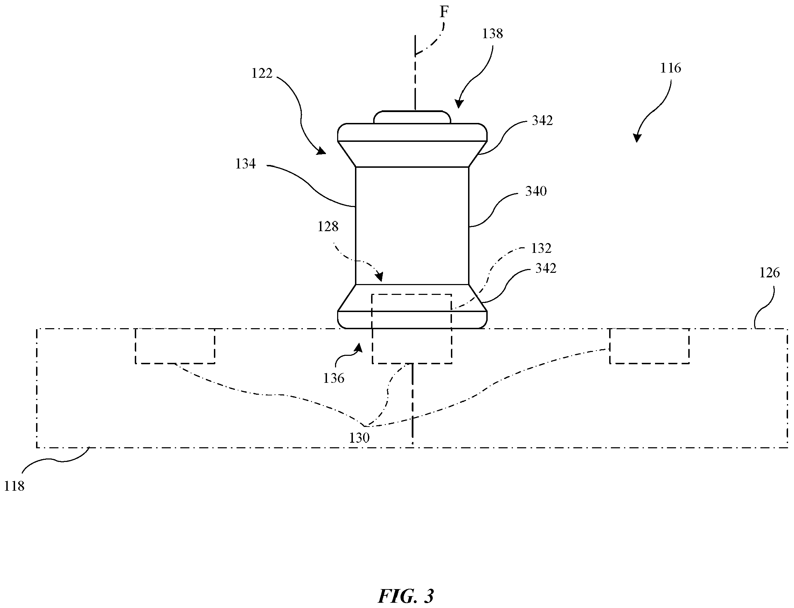

FIG. 3 is a side elevational view illustration of an example implementation of the fixture 122. To further the ability of the fixture 122 to secure the object 124, the engagement surface 134 has an abutment section 340 that extends orthogonal to the tabletop 118 and a wedge section 342 adjacent the abutment section 340 and disposed at an angle transverse to the abutment section 340. The abutment section 340 and the wedge section 342 are arranged to contact and secure the object 124. More specifically, the fixture 122 extends along a fixture axis F orthogonal to the tabletop 118 and includes the engagement surface 134 having the wedge section 342 disposed at an angle transverse to the fixture axis F and the abutment section 340, adjacent the wedge section 342, extending parallel to the fixture axis F, with the abutment section 340 and the wedge section 342 are arranged to contact and secure the object 124. As shown in FIG. 3, the fixture 122 utilizes a pair of the wedge section 342, with one of the wedge sections 342 disposed adjacent the proximal end 136 and with the other wedge section 342 disposed adjacent the distal end 138. The abutment section 340 extends between the wedge sections 342. The wedge sections 342 are angled toward the abutment section 340. As such, the wedge sections 342 may direct the object 124 toward the surface area of the abutment section 340 and the friction facilitated by the abutment section 340. Moreover, the angle of the wedge sections 342 ensures contact between the object 124 and the fixture 122 if the object 124 moves in any of the longitudinal direction X, the lateral direction Y, and the elevational direction Z. More specifically, angles of the wedge sections 342 facilitate positioning a portion of the fixture 122 above and/or below the object 124 to prevent movement of the object 124 in the elevational direction Z. The wedge section 342 may be disposed along any suitable portion of the engagement surface 134. Moreover, any number of the wedge sections 342 may be utilized by the fixture 122.

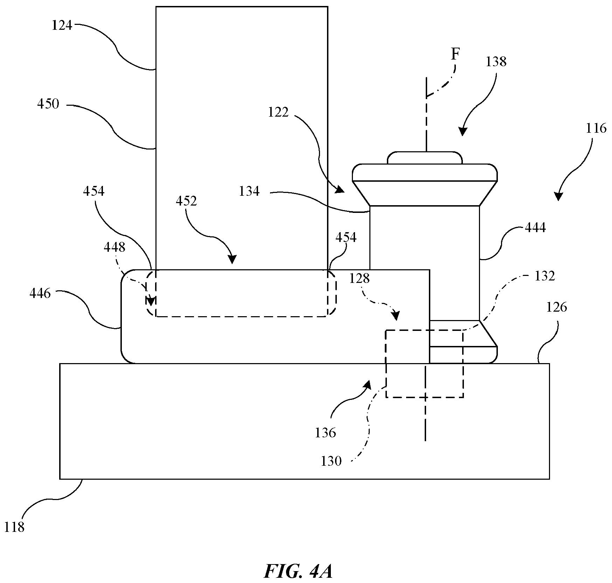

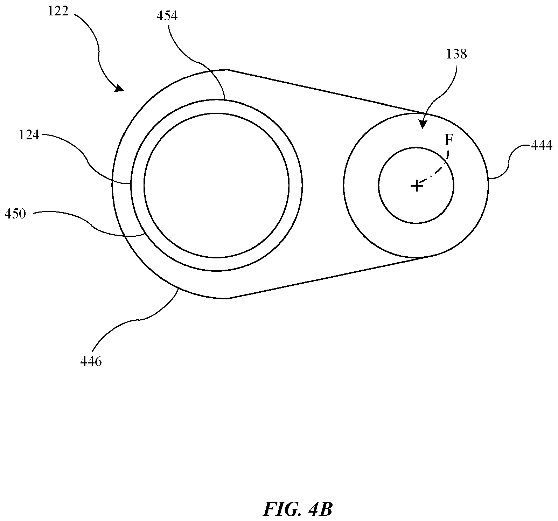

The fixture 122 may include additional features to secure the object 124 in addition to the contact with the engagement surface 134. FIGS. 4A and 4B are respective side elevational and top plan view illustrations of an example implementation of the fixture 122 in which the fixture 122 includes a body 444 that extends along the fixture axis F orthogonal to the upper surface 126 of the tabletop 118 and a tray 446 that extends laterally from the body 444 along the upper surface 126 of the tabletop 118. The tray 446 defines a recess 448 configured to dispose and support the object 124 therein. The recess 448 may be sized and shaped for various objects. For example, FIG. 4B shows the recess 448 having a circular configuration that is sized to receive a beverage container 450. The recess 448 is centered within the tray 446 such that the tray 446 encircles and contacts the beverage container 450, creating a friction fit between the tray 446 and the beverage container 450. The tray 446 may include top surface that defines an upper opening 452 into the recess 448. The upper surface 126 may extend of the recess 448 and define a lip 454, as shown in FIG. 4A. The lip 454 may be comprised of a deformable material (such as an elastomer). The lip 454 may be deform around the beverage container 450 at the upper opening 452 to further grip and secure the beverage container 450 to the fixture. The recess 448 may be any size, shape, and configuration for holding a suitable object.

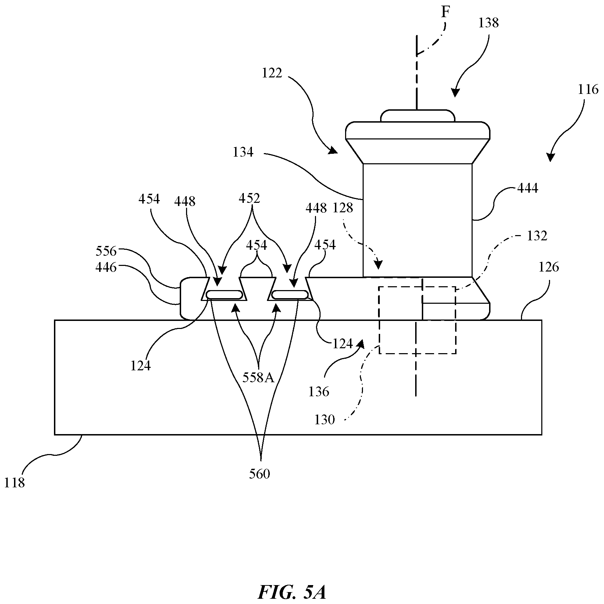

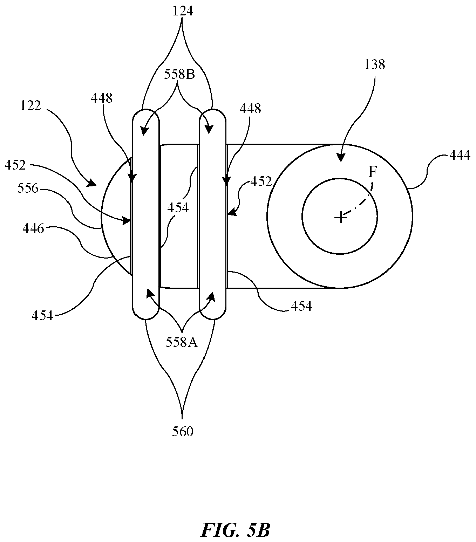

The fixture 122 may be configured to secure more than one object 124. FIGS. 5A and 5B are respective side elevational and top plan view illustrations of an example implementation of the fixture 122, in which the tray 446 of the fixture 122 defines a pair of the recess 448. The recesses 448 are configured as channels that include the upper opening 452. The tray 446 further includes a perimeter wall 556 that defines a pair of lateral openings 558A, 558B. The lateral openings 558A, 558B allow the object 124 to be partially disposed within the recess 448 and extend out of the lateral openings 558A, 558B. For example, FIG. 5B shows utensils 560 disposed in the recesses 448 and extending out of the lateral openings 558A, 558B. As such, the tray 446 may accommodate objects 124 that are larger than the tray 446.

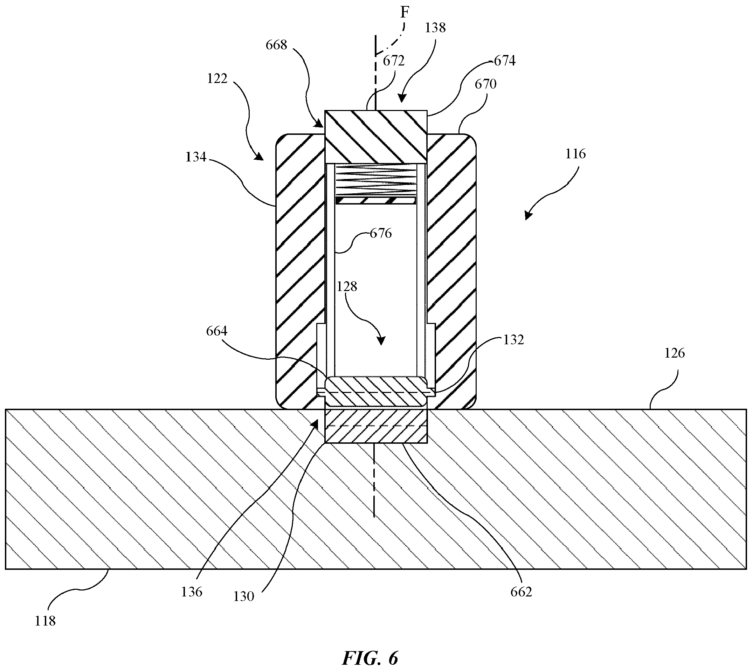

Examples of the first portion 130 and the second portion 132 of the retention portion 128 and their respective coupling are described in detail below. FIG. 6 shows a side cross-sectional view illustration of an example implementation of the table system 116. The first portion 130 of the retention portion 128 includes a first magnet 662 having a first polarity and the second portion 132 includes a second magnet 664 having a second polarity that is opposite the first polarity such that the first magnet 662 and the second magnet 664 are magnetically attracted toward one another. More specifically, the tabletop 118 includes the first magnet 662 and the fixture 122 includes the second magnet 664. The magnetic attraction between the first magnet 662 and the second magnet 664 couples the fixture 122 to the tabletop 118 and retains the fixture 122 in the longitudinal direction X, the lateral direction Y, and the elevational direction Z.

The table system 116 further comprises a release portion 668 coupled to the retention portion 128 and arranged to alter the retention portion 128 between the retained state and the unretained state. The fixture 122 includes an exterior surface 670. In the implementation shown in FIG. 6, the release portion 668 is mounted to the fixture 122. The release portion 668 includes a contact patch 672 along the exterior surface 670 configured to be engaged by the passenger 105 to alter the retention portion 128 between the retained state and the unretained state. As such, engagement of the contact patch 672 permits selective movement of the fixture 122 along the upper surface 126. The contact patch 672 is shown at the distal end 138 of the fixture 122 in FIG. 6. However, the contact patch 672 may be disposed anywhere on the fixture 122. Alternatively, the release portion 668 may be mounted to the tabletop 118 with contact patch 672 disposed on the tabletop 118. Moreover, the contact patch 672 may be disposed on a component separate from the fixture 122 and the tabletop 118 and configured to facilitate actuating the release portion 668 and altering the retention portion 128 between the retained state and the unretained state through cables, levers, pulleys, wired or wireless communication or any other suitable manner.

In the implementation shown in FIG. 6, the release portion 668 includes a button 674 extending from the exterior surface 670 and includes the contact patch 672, with the button 674 movable between a pressed position and a released position to permit selective movement of the fixture 122 along the upper surface 126. The contact patch 672 may be part of any other suitable mechanical mechanism, such as a toggle, lever, or switch. Furthermore, the contact patch 672 may be a sensor, including (but not limited to) a capacitive touch sensor and a proximity sensor, configured to send a signal to the release portion 668 to alter the state of the retention portion 128.

In the implementation shown in FIG. 6, the release portion 668 moves the second portion 132 of the retention portion 128 from the retained state to the unretained state. More specifically, the first magnet 662 and the second magnet 664 are permanent magnets that create their own persistent magnetic fields. The first polarity of the first magnet 662 refers to the north or south polarity of the first magnet 662 that is facing the fixture 122 while the second polarity of the second magnet 664 refers to the north or south polarity of the second magnet 664 that is facing the tabletop 118. The first magnet 662 and the second magnet 664 are attracted to one another when opposing north and south polarities are facing one another. The second magnet 664 is rotatably coupled to the fixture 122. The release portion 668 includes an actuator 676 configured to rotate the second magnet 664. Pressing the button 674 rotates the second magnet 664 one hundred and eighty degrees and reverses the polarity that is facing the first magnet 662. Therefore, the fixture 122 may be selectively coupled to the tabletop 118 by pressing the button 674. For exemplary purposes, during operation pressing the button 674 rotates the second magnet 664 one hundred and eighty degrees. The polarity of the second magnet 664 facing the first magnet 662 opposes the polarity of the first magnet 662. The first magnet 662 and the second magnet 664 are magnetically attracted to one another and the fixture 122 is coupled to the tabletop 118. Pressing the button 674 rotates the second magnet 664 one hundred and eighty degrees. The polarity of the second magnet 664 facing the first magnet 662 is the same as the polarity of the first magnet 662. The first magnet 662 and the second magnet 664 magnetically repel one another and the fixture 122 is decouple from the tabletop 118.

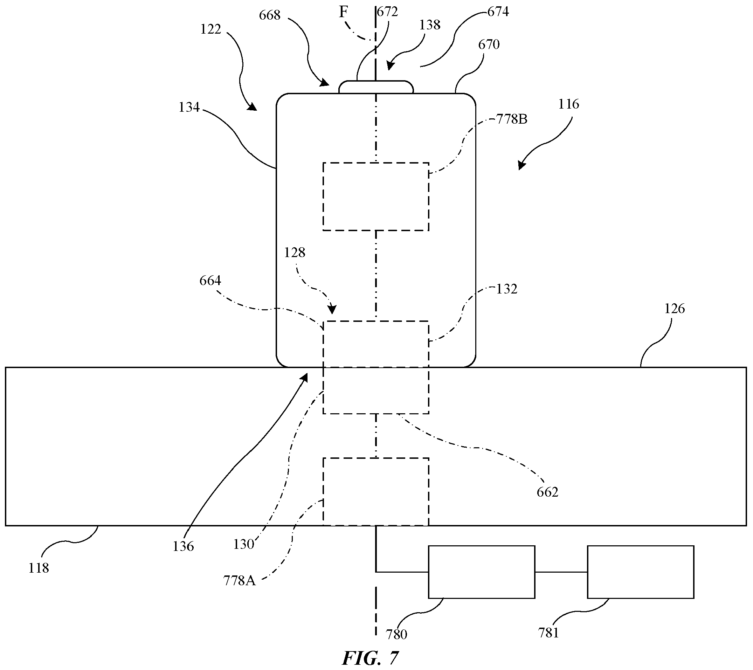

FIG. 7 is a schematic side view illustration of an example implementation of the table system 116 in which at least one of the first magnet 662 and the second magnet 664 may be an electromagnet. In the implementation shown in FIG. 7, both of the first magnet 662 and the second magnet 664 are electromagnets. The second magnet 664 is capable of alternating polarity such that the first magnet 662 and the second magnet 664 may alternate between magnetic attraction that couples the fixture 122 to the tabletop 118 and magnetic repulsion that releases the fixture 122 from the tabletop 118. More specifically, each of the fixture 122 and the tabletop 118 may include a power supply 778A, 778B independent of one another. The power supply 778A of the tabletop 118 may be wired to the first magnet 662 and configured to supply an electric current to the first magnet 662 capable of generating a magnetic field having the first polarity. The power supply 778B of the fixture 122 may be wired to the second magnet 664 and configured to supply an electric current to the second magnet 664 capable of generating a magnetic field having the second polarity. When more than one fixture 122 is utilized, any number of fixtures 122 may be powered by the power supply 778B. Each of the fixtures 122 that are powered may have their own power supply 778B. Alternatively, one power supply 778B may power more than one fixture 122. The button 674 may be a switch configured to change the flow of the electric current to the second magnet 664 between a first direction facilitating one of the north and south polarities and a second direction facilitating the other one of the north and south polarities. As such, engaging the button 674 would reverse the polarity of the second magnet 664 to alternate between magnetic attraction with the first magnet 662 and magnetic repulsion of the first magnet 662. Moreover, stopping current to the second magnet 664 would eliminate the magnetic field generated by the second magnet 664 and thus eliminate the polarity of the second magnet 664. It is to be appreciated that the first magnet 662 may be coupled to the release portion 668 and alternate between polarities and/or no polarity.

In FIG. 7, the vehicle 100 includes a controller 780 and at least one vehicle event detection system 781 in communication with the controller 780. In this implementation, the controller 780 is dedicated to only the table system 116. However, the controller 780 may be utilized for other systems within the vehicle 100. For example, the controller 780 may be utilized for controlling safety systems within the vehicle, including airbags, seatbelt pretensioners, crash prevention, etc. The vehicle event detection system 781 may be any component configured to send a signal to the controller 780 indicating that the vehicle event has occurred or is about to occur, including (but not limited to) an accelerometer, a pressure sensor, a lidar system, a radar system, a vehicle-to-everything (V2X) communication system, and a navigation system. The controller 780 is coupled to, and in electronic communication with the power supply 778A of the tabletop 118. The controller 780 may alter the amount and direction of the current flowing to the first magnet 662 to accommodate for signals received from the vehicle event detection system 781. For example, if the controller 780 receives a signal from the vehicle event detection system 781 and determines that a vehicle event has or will occur, the controller 780 may communicate with the power supply 778A to increase the current to the first magnet 662 and thus increase the force of the magnetic attraction between the first magnet 662 and the second magnet 664. The accompanying increase in force prevents decoupling of the fixture 122 from the tabletop 118 to prevent the object 124 from becoming a projectile during the vehicle event. The selective increase in current during the vehicle event allows for lower power consumption when strong magnetic force is not required during normal driving but increased magnetic force when necessary to retain the object 124 during a vehicle event. The controller 780 may also be configured to detect changes in current to the first magnet 662. For example, if the passenger 105 pulls the fixture 122 when the fixture 122 is coupled to the tabletop 118 through magnetic attraction the magnetic field of the first magnet 662 will alter. The alteration in the magnetic field will vary the current flow through the first magnet 662. The controller 780 may recognize the change in current as the passenger 105 is trying to move the fixture 122. If the vehicle 100 is not in a recognized vehicle event, the controller 780 may end current flow to the first magnet 662 or reverse current flow to the first magnet 662 to reverse the polarity of the first magnet 662, thus facilitating release of the fixture 122.

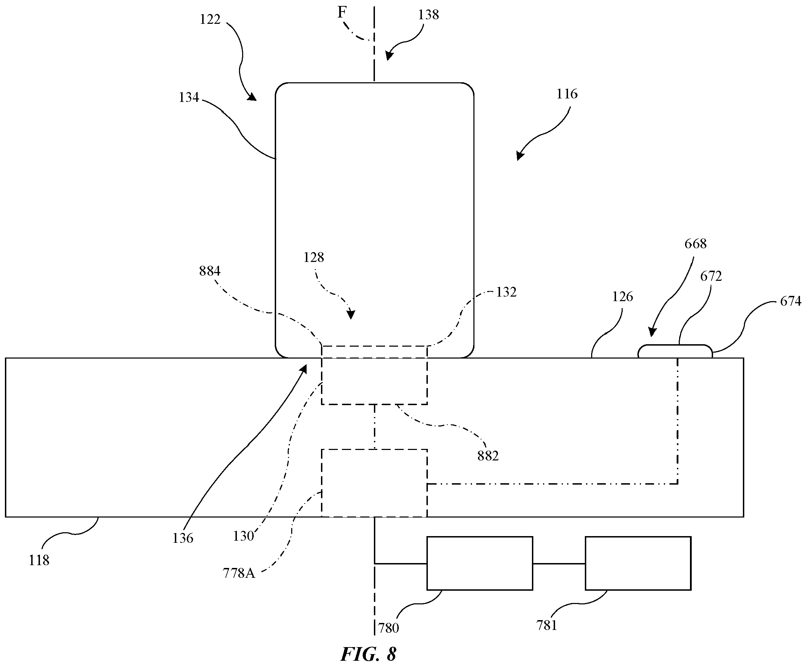

FIG. 8 is a schematic side view illustration of an example implementation of the table system 116 in which one or more of the first portions 130 (i.e., at one or more of the mounting locations) includes one of a magnet 882 and a plate 884. The second portion 132 includes the other one of the magnet 882 and the plate 884. The plate 884 comprises a ferrous material that is magnetically attracted toward the magnet 882. In FIG. 8, the tabletop 118 includes the magnet 882 and the fixture 122 includes the plate 884. The magnetic attraction between the plate 884 and the magnet 882 couples the fixture 122 to the tabletop 118 and retains the fixture 122 in the longitudinal direction X, the lateral direction Y, and the elevational direction Z.

In the implementation shown in FIG. 8, the release portion 668 is mounted to the tabletop 118 with the contact patch 672 disposed on the upper surface 126 of the tabletop 118. The magnet 882 is an electromagnet. The power supply 778A of the tabletop 118 is wired to the magnet 882 and configured to supply the electric current to the magnet 882 capable of generating the magnetic field. The release portion 668 is electrically coupled to the magnet 882 and is configured to alternate between providing current to the magnet 882 to facilitate the magnetic field and magnetic attraction with the plate 884 and stopping current to the magnet 882 to at least reduce (and preferably eliminate) the magnetic attraction between the plate 884 and the magnet 882.

The controller 780 may alter the amount and direction of the current flowing to the magnet 882 to accommodate for signals received from the vehicle event detection system 781. For example, if the controller 780 receives a signal from the vehicle event detection system 781 and determines that a vehicle event has or will occur, the controller 780 may communicate with the power supply 778A to increase the current to the magnet 882 and thus increase the force of the magnetic attraction between the magnet 882 and the plate 884. The accompanying increase in force prevents decoupling of the fixture 122 from the tabletop 118 to prevent the object 124 from becoming a projectile during the vehicle event. The selective increase in current during the vehicle event allows for lower power consumption when strong magnetic force is not required during normal driving but increased magnetic force when necessary to retain the object 124 during a vehicle event. The controller 780 may also be configured to detect changes in current to the magnet 882. For example, if the passenger 105 pulls the fixture 122 when the fixture 122 is coupled to the tabletop 118 through magnetic attraction, the magnetic field of the magnet 882 will alter. The alteration in the magnetic field will vary the current flow through the magnet 882. The controller 780 may recognize the change in current as the passenger 105 is trying to move the fixture 122. If the vehicle 100 is not in a recognized vehicle event, the controller 780 may end current flow to the magnet 882, thus facilitating release of the fixture 122.

In other implementations, the fixture 122 may include the magnet 882 while the tabletop 118 may include the plate 884. Furthermore, the magnet 882 may be a permanent magnet that creates its own persistent magnetic field.

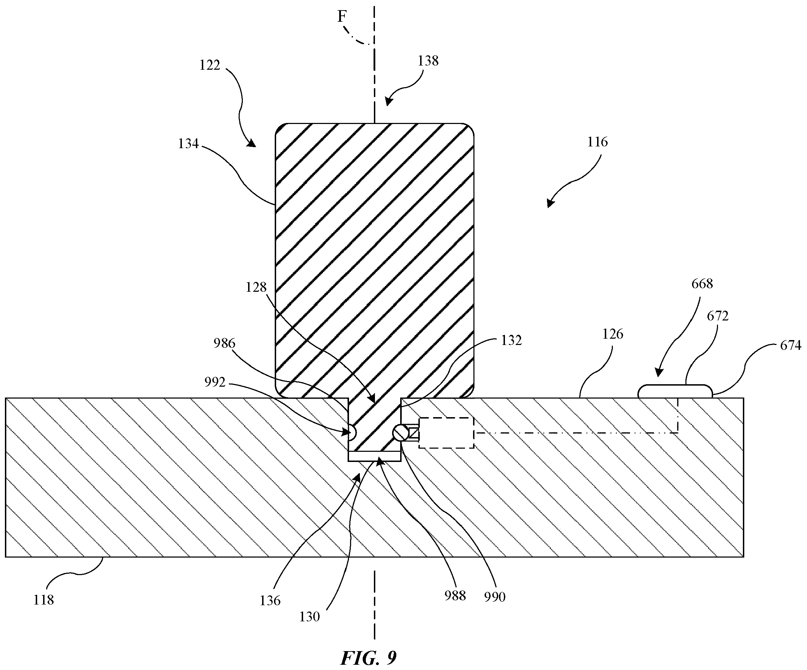

FIG. 9 is a cross-sectional side view illustration of an example implementation of the table system 116 in which one or more of the first portions 130 includes one of a post 986 and a cavity 988 and the second portion 132 includes the other one of the post 986 and the cavity 988. The cavity 988 is configured to receive the post 986 in the retained state to restrain the fixture 122. More specifically, FIG. 9 shows one or more of the first portions 130 of the tabletop 118 including the cavity 988 and the second portion 132 of the fixture 122 including the post 986. The post 986 and the cavities 988 have corresponding and complementary configurations to ensure that the post 986 may be inserted into any of the cavities and limit movement between the fixture 122 and the tabletop 118. More specifically, the post 986 and the cavity 988 are configured as cylinders in FIG. 9. However, any suitable shape may be utilized. The post 986 and the cavity 988 may retain the fixture 122 along the elevational direction Z through a friction fit between the post 986 and the cavity 988. The post 986 and the cavity 988 may also utilize a detent system to assist in retaining the post 986 within the cavity 988. In the example shown in FIG. 9, the tabletop 118 includes a ball 990 while the post 986 defines a detent 992 having a hemispherical configuration that is sized to receive at least a portion of the ball 990. The remaining portion of the ball 990 engages the tabletop 118. The ball 990 engages the post 986 in the detent 992. The ball 990 may be biased toward the post 986 (such as with a spring) and is retained in the detent 992 through the bias. The ball 990 and the detent 992 secure the post 986 along the elevational direction Z. The release portion 668 may be coupled to the ball 990 and may move the ball 990 back into the tabletop 118, away from the post 986, to remove the post 986 from the cavity 988 and release the fixture 122 from the tabletop 118. Although the ball 990 is shown having a spherical configuration and the detent 992 is shown having a complementary shape, the ball 990 and the detent 992 may have any suitable shape and size for retaining the post 986 within the cavity 988.

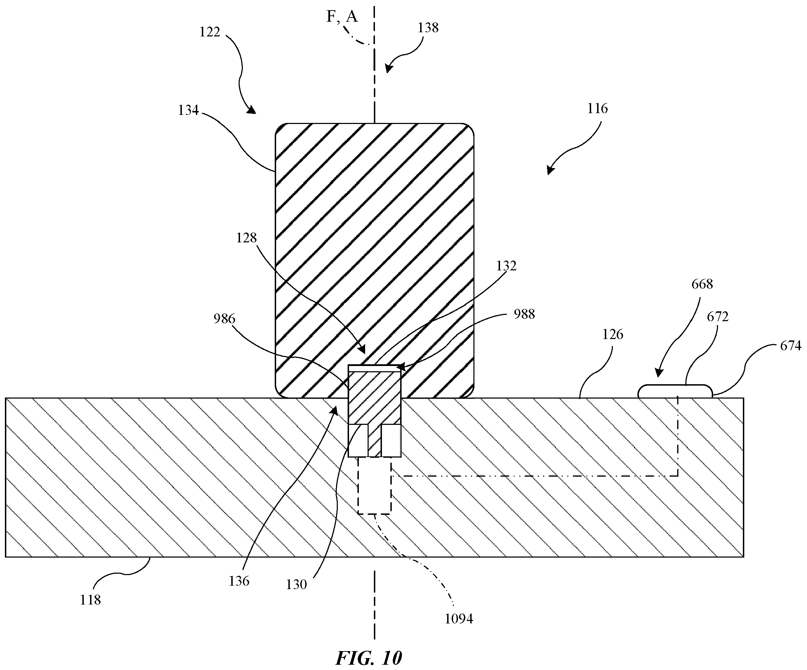

FIG. 10 is a cross-sectional side view illustration of an example implementation of the table system 116 in which the retention portion 128 further includes an actuator 1094 coupled to the post 986 and arranged to move the post 986 along an axis A between a first position and a second position. The post 986 is disposed within the cavity 988 in the first position in the retained state and with the post 986 withdrawn from the cavity 988 in the second position in the unretained state. The movement of the post 986 facilitates selective mechanical coupling between the fixture 122 and the tabletop 118 while presenting hiding the components that facilitate the mechanical coupling when not in use. In the implementation shown in FIG. 10, the first portion 130 of the retention portion 128 includes the post 986. More specifically, the post 986 may be disposed at each of the mounting locations. Moreover, the post 986 may be disposed at any number of mounting locations. When the fixture 122 is disposed at one of the mounting locations, the post 986 at the respective mounting location protrudes above the tabletop 118 in the first position to engage the cavity 988 of the fixture 122 and facilitate coupling the fixture 122 to the table. The post 986 is disposed within the tabletop 118 in the second position, which decouples the fixture 122 from the tabletop 118 and permits movement of the fixture 122 independent of the tabletop 118. The posts 986 are flush with the upper surface 126 of the tabletop 118 in the second position. The term flush refers to the posts 986 being disposed within the tabletop 118, but even with the upper surface 126, such that the upper surface 126 appears planar, smooth, and aesthetically pleasing. However, the posts 986 may be recessed within the tabletop 118 such that posts 986 are disposed below the upper surface 126.

In the example shown in FIG. 10, the actuator 1094 is an electric motor that is coupled to the release portion 668. The passenger 105 engages the release portion 668 which sends a signal to the actuator 1094 move between the first position and the second position. However, the actuator 1094 may be any suitable system for moving the post 986, including (but not limited to) a hydraulic pump, a pneumatic pump, linkages, gears, and cables.

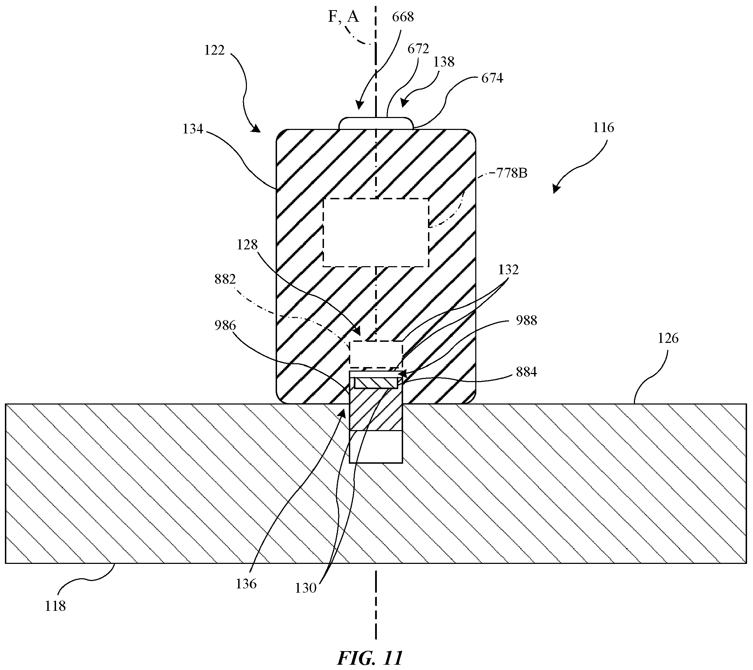

FIG. 11 is a cross-sectional side view illustration of an example implementation of the table system 116 in which one or more of the first portions 130 includes one of the magnet 882 and the plate 884 and the second portion 132 includes the other one of the magnet 882 and the plate 884. The plate 884 comprises a ferrous material that is magnetically attracted toward the magnet 882. More specifically, one or more of the posts 986 of the tabletop 118 in FIG. 11 include the plate 884 while the fixture 122 includes the magnet 882 adjacent the cavity 988. The post 986 and the cavity 988 restrain horizontal movement of the fixture 122 relative to the tabletop 118. The magnet 882 and the plate 884 restrain vertical movement of the fixture 122 relative to the tabletop 118 (i.e., along the elevational direction Z). The magnet 882 in FIG. 11 is an electromagnet. The power supply 778B of the fixture 122 is wired to the magnet 882 and configured to supply the electric current to the magnet 882 capable of generating the magnetic field. The release portion 668 is electrically coupled to the magnet 882 and is configured to alternate between providing current to the magnet 882 to facilitate the magnetic field and magnetic attraction with the plate 884 and stopping current to the magnet 882 to at least reduce (and preferably eliminate) the magnetic attraction between the plate 884 and the magnet 882. When the magnet 882 produces the magnetic field, the plate 884 of the post 986 is drawn toward the magnet 882, causing the post 986 to rise from the tabletop 118 and into the cavity 988. The disposition of the post 986 in the cavity 988 retains the fixture 122 relative to the tabletop 118 in the longitudinal direction X and the lateral direction Y while the magnetic attraction between the magnet 882 and the plate 884 retains the fixture 122 relative to tabletop 118 in the elevational direction Z. When the magnetic field of the magnet 882 is terminated, the post 986 recedes from the cavity 988 and back into the tabletop 118 due to the force of gravity. The post 986 may also be biased back into the tabletop 118.

Although the implementations of the tabletop 118 and the fixture 122 are shown independently within the Figures, the implementations described above may be utilized in a table system 116 in any combination with one another. For example, the table system may include one or more fixtures 122 utilizing the magnet 882 and the plate 884 and one or more fixtures 122 utilizing the first magnet 662 and the second magnet 664.

As described above, one aspect of the present technology is the gathering and use of data available from various sources for use in controlling a vehicle. As an example, such data may identify the user and include user-specific settings or preferences. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, a user profile may be established that stores user preference related information that allows operation of a device according to user preferences. Accordingly, use of such personal information data enhances the user's experience.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, the present technology can be configured to allow users to select to "opt in" or "opt out" of participation in the collection of personal information data during registration for services or anytime thereafter. In another example, users can select not to provide data regarding usage of specific applications. In yet another example, users can select to limit the length of time that application usage data is maintained or entirely prohibit the development of an application usage profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, information may be determined each time the system is used, and without subsequently storing the information or associating with the particular user.

## Claims

1. A table system for a vehicle, comprising:
a tabletop that defines mounting locations spaced from one another;
a fixture configured to secure an object; and
a retention portion having a first portion defined by the tabletop at each of the mounting locations and a second portion defined by the fixture, with the second portion arranged to couple with the first portion at any of the mounting locations, wherein the retention portion alternates between a retained state, in which the first portion and the second portion are coupled and motion of the fixture is restrained, and an unretained state, in which the first portion and the second portion are decoupled and the fixture is movable with respect to the tabletop.

2. The table system of claim 1, wherein at least one of the first portions includes one of a magnet and a plate and the second portion includes the other one of the magnet and the plate, wherein the plate comprises a ferrous material that is magnetically attracted toward the magnet.

3. The table system of any of claims 1 and 2, wherein at least one of the first portions of the retention portion includes a first magnet having a first polarity and the second portion includes a second magnet having a second polarity that is opposite the first polarity such that the first magnet and the second magnet are magnetically attracted toward one another.

4. The table system of any of claims 1-3, wherein at least one of the first portions includes one of a post and a cavity and the second portion includes the other one of the post and the cavity, with the cavity configured to receive the post in the retained state to restrain the fixture.

5. The table system of claim 4, wherein the retention portion further includes an actuator coupled to the post and arranged to move the post along an axis between a first position and a second position, with the post disposed within the cavity in the first position in the retained state and with the post withdrawn from the cavity in the second position in the unretained state.

6. The table system of claim 5, wherein the first portion of the retention portion includes the post, with the post configured to protrude above the tabletop in the first position to engage the cavity of the fixture and with the post disposed within the tabletop in the second position.

7. The table system of any of claims 4 and 5, wherein the at least one of the first portions includes one of a magnet and a plate and the second portion includes the other one of the magnet and the plate, with the plate comprising a ferrous material that is magnetically attracted toward the magnet;
wherein the post and the cavity restrain horizontal movement of the fixture relative to the tabletop; and
wherein the magnet and the plate restrain vertical movement of the fixture relative to the tabletop.

8. The table system of any of claims 1-7, further including a release portion coupled to the retention portion and arranged to alter the retention portion between the retained state and the unretained state.

9. The table system of claim 8, wherein the fixture includes an exterior surface and the release portion includes a contact patch along the exterior surface configured to be engaged by a passenger to alter the retention portion between the retained state and the unretained state.

10. The table system of any of claim 8 and 9, wherein the release portion moves the second portion of the retention portion from the retained state to the unretained state.

11. The table system of any of claim 8-10, wherein the release portion includes a button that extends from the exterior surface and includes the contact patch, with the button movable between a pressed position and a released position to permit selective movement of the fixture along the tabletop.

12. The table system of any of claims 1-11, wherein the fixture extends along a fixture axis orthogonal to the tabletop and includes an engagement surface having a wedge section disposed at an angle transverse to the fixture axis and an abutment section, adjacent the wedge section, and configured to extend parallel to the fixture axis, with the abutment section and the wedge section arranged to contact and secure the object.

13. The table system of claim 12, wherein the engagement surface of the fixture extends from a proximal end, adjacent the tabletop, to a distal end.

14. The table system of any of claims 1-13, wherein the fixture includes a body that extends along a fixture axis orthogonal to the tabletop and a tray that extends laterally from the body along the tabletop, wherein the tray defines a recess configured to dispose and support the object therein.

15. The table system of any of claims 1-14, wherein the fixture includes an elastomer that deforms around the object when the fixture contacts the object.
